## Europäisches Patentamt
## European Patent Office
## Office européen des brevets

(19)

(11) Veröffentlichungsnummer: **0 244 793**
**A1**

(12) **EUROPÄISCHE PATENTANMELDUNG**

(21) Anmeldenummer: **87106401.0**

(22) Anmeldetag: **04.05.87**

(51) Int. Cl.⁴: **G09B 21/00**

(30) Priorität: **06.05.86 AT 1211/86**

(43) Veröffentlichungstag der Anmeldung:
**11.11.87 Patentblatt 87/46**

(84) Benannte Vertragsstaaten:
**AT BE CH DE FR GB IT LI LU NL SE**

(71) Anmelder: **SIEMENS AKTIENGESELLSCHAFT ÖSTERREICH**
**Siemensstrasse 88 - 92**
**A-1210 Wien(AT)**

(84) **AT**

(71) Anmelder: **Siemens Aktiengesellschaft Berlin und München**
**Wittelsbacherplatz 2**
**D-8000 München 2(DE)**

(84) **BE CH DE FR GB IT LI LU NL SE**

(72) Erfinder: **Chlumsky, Lubomir**
**Illekgasse 8/11**
**A-1150 Wien(AT)**
Erfinder: **Hellinger, Leopold**
**Vereinsgasse 12/17**
**A-1020 Wien(AT)**
Erfinder: **Kauer, Christian**
**Hörnesgasse 8**
**A-1030 Wien(AT)**

(54) **Taktiles Punktschrift- bzw. Bilddisplay.**

(57) Taktiles Punktschrift-bzw. Bilddisplay mit einem flächenhaften Darstellungsträger (1) mit in ihren Abtastpositionen erhabenen Rasterpunkten, die von durch Öffnungen an der Oberseite des Darstellungsträgers (1) hindurchragende Kalotten von Tastkugeln (3,3') gebildet werden, die durch Verstellung zugeordneter Verriegelungskugeln (11,11') selektiv in die Abtastposition gebracht werden. Zur Verstellung jeder Verriegelungskugel (11,11') ist je ein in die Unterseite des Darstellungsträgers (1) einschiebbarer Verriegelungsanker (10,10') vorgesehen, der mittels eines Stellankers (8,8') einer beweglichen Stellvorrichtung (4) einerseits in die Verriegelungslage einschiebbar und anderseits nach Magnetisierung des Stellankers (8,8') durch diesen aus der Verriegelungslage lösbar ist. Die Verriegelungskugel (11,11') steht unter Federdruck (Gummiwulst 12,12') und ist in der Verriegelungslage durch den Verriegelungsanker (10,10') gegen den Federdruck unter die

Tastkugel (3,3') verschoben, um diese in ihrer Abtastposition festzuhalten, wobei zweckmäßig zwischen der Tastkugel (3,3') und der Verriegelungskugel (11,11') eine weitere, der Distanzeinhaltung dienende Füllkugel (13,13') angeordnet ist.

## Taktiles Punktschrift-bzw. Bilddisplay

Die Erfindung betrifft ein taktiles Punktschrift-bzw. Bilddisplay mit einem flächenhaften Darstellungsträger mit in ihren Abtastpositionen erhabenen Rasterpunkten, die von durch Öffnungen an der Oberseite des Darstellungsträgers hindurchragende Kalotten von Tastkugeln gebildet werden, die durch Verstellung zugeordneter Verriegelungsstücke selektiv in die Abtastposition gebracht werden.

Die Blindenschrift nach Braille ist aus Buchstaben bzw. Zeichen aufgebaut, die aus Kombinationen von entweder 6 oder 8 unter-bzw. nebeneinander angeordneten tastbaren Rasterpunkten bestehen, wobei zudem noch durch eine unterschiedliche Rasterpunktentfernung eine Rasterkennzeichnung erfolgt. Diese Kombinationen werden üblicherweise als "Formen" bezeichnet. Für Blindenschrift-Ausgabegeräte mit Tastknöpfen eignet sich ein Braille-Rastermaß von ca. 3 mm.

Es sind elektromagnetisch betätigbare Ausgabegeräte für Blindenschrift bekannt, die mit einem Tableau versehen sind, das ein Lochraster mit der Grundstruktur der Blindenschriftzeichen aufweist. In diesen Löchern befinden sich Stifte, die einzeln mittels Elektromagnete nach oben bewegt werden können, derart, daß die nach außen ragenden Stifte in ihrer Gesamtheit die Blindenschriftzeichen repräsentieren. Bei einer dieser bekannten Ausführungen sind die nach außen ragenden Enden der Stifte als Kugelkalotten ausgebildet. Alle diese bekannten Ausführungen von Lesegeräten dienen der Präsentation eines Textes in einem Umfang, der durch die Größe des Darstellungsfeldes bestimmt ist. Wenn mit Hilfe solcher Geräte ein längerer Text in tastbarer Form dargestellt werden soll, muß dieser in Abschnitte entsprechend der Größe des Aufzeichnungsfeldes unterteilt, abgespeichert und dieser Speicherinhalt in elektrische Signale umgesetzt werden.

In der US-PS 3 987 438 ist ein Blindenschrift-Ausgabegerät beschrieben, bei dem für jeden Tastknopf zwei Magnete vorgesehen sind, die zumindest in Achs richtung untereinander angeordnet sind, und von denen wenigstens einer als Elektromagnet ausgebildet ist. Die Magnete erzeugen durch elektrische Erregung eine Kraft in der Achsenrichtung des Tastknopfes. Diese Kraft hebt oder senkt den Tastknopf mittels einer Magnetspule gemäß der Erregungsrichtung. Für jeden Tastknopf ist eine mechanische, magnetisch steuerbare Verriegelungseinrichtung vorgesehen, die nur auf den Tastknopf einwirkt. Nachteilig ist hier der mechanische Bauteilaufwand für eine Vielzahl von Knöpfen bei Anwendung für ein Bilddisplay.

Weiters ist in der DE-OS 26 08 659 ein Blindenschrift-Ausgabegerät beschrieben, bei dem zur Darstellung der Tastpunkte als Permanentmagnete ausgebildete Taststifte vorgesehen sind, die durch je einen oder zwei zugeordnete, ebenfalls permanentmagnetische Trägerstifte verschiebbar sind. Die Tastund Trägerstifte sind mit ungleichnamigen Polen aneinandergereiht und die Taststifte werden durch magnetisch ausgelöste Kippbewegungen der Trägerstifte in ihrer Längsrichtung verschoben. Im Zug der ständigen magnetischen Wechselbeanspruchung der Trägerstifte besteht die Gefahr einer Entmagnetisierung und damit einer Beeinträchtigung des einwandfreien Funktionierens.

Der Erfindung liegt die Aufgabe zugrunde, bei einem Blindenschrift-Ausgabegerät einen flächenhaften Darstellungsträger zu schaffen, der sowohl eine mehrzeilige Punktschriftdarstellung als auch eine Bilddarstellung erlaubt, bei dem die Rasterpunkte in ihren Abtastpositionen so fest verriegelt sind, daß eine mit einfachen Mitteln durchführbare Kopierfähigkeit gegeben ist. Dieser Darstellungsträger soll auch sonst die Funktionen ausführen, die ein Datensichtgerät üblicherweise bei der elektronischen Datenverarbeitung erfüllt, beispielsweise eine eigene Zeile (Editierzeile) für Programmier-und Abfragezwecke aufweisen.

Die Erfindung löst diese Aufgabe dadurch, daß zur Verstellung jedes Verriegelungsstückes je ein in die Unterseite des Darstellungsträgers einschiebbarer Verriegelungsanker vorgesehen ist, der mittels eines Stellankers einer beweglichen Stellvorrichtung einerseits in die Verriegelungslage einschiebbar und anderseits nach Magnetisierung des Stellankers durch diesen aus der Verriegelungslage lösbar ist.

Eine konstruktiv besonders einfache Lösung ergibt sich, wenn als Verriegelungsstück eine unter Federdruck stehende Verriegelungskugel dient, die in der Verriegelungslage durch den Verriegelungsanker gegen den Federdruck unter die Tastkugel verschoben ist, um diese in ihrer Abtastposition festzuhalten und wenn zwischen der Tastkugel und der Verriegelungskugel eine weitere, der Distanzeinhaltung dienende Füllkugel angeordnet ist.

Um den Verriegelungsanker in seiner Verriegelungslage zu fixieren, ist es zweckmäßig, wenn der Verriegelungsanker mit einem die Verriegelungskugel in der Verriegelungslage teilweise umgreifenden Ansatz versehen ist, der eine leicht lösbare, kraftschlüssige Verbindung herstellt.

Nach weiteren Merkmalen der Erfindung sind dieStellanker für mehrere Rasterpunkte, insbesondere für die Rasterpunkte einer Formenzeile, zusammen mit ihren Magnetisierungswicklungen auf einer gemeinsamen Stellvorrichtung angeordnet, wobei die für eine Formenzeile vorgesehene Stellvorrichtung auf beiderseits des Darstellungsträgers vorgesehen Schienen senkrecht zur Zeilenrichtung verschiebbar angeordnet ist und zum Zweck der Einstellung der Abtastpositionen der Rasterpunkte dieser Formenzeile mit Hilfe von Exzentern gegenüber dem Darstellungsträger verstellbar ist.

Es erweist sich als zweckmäßig, wenn die Exzenter auf den Schienen verschiebbar, jedoch mittels einer Längsnut gegen relative Verdrehung gegenüber den Schienen gesichert angeordnet sind.

Im Ausführungsbeispiel sind folgende Bezeichnungen verwendet: 1: Darstellungsträger, 2: Kugelkanal, 3: Tastkugel, 4: Stellvorrichtung, 5: Exzenter, 6: Schiene, 7: Längsnut, 8: Stellanker, 9: Magnetisierungswicklung, 10: Verriegelungsanker, 11: Verriegelungskugel, 12: Gummiwulst, 13: Füllkugel, 14: Ansatz am Verriegelungsanker 10.

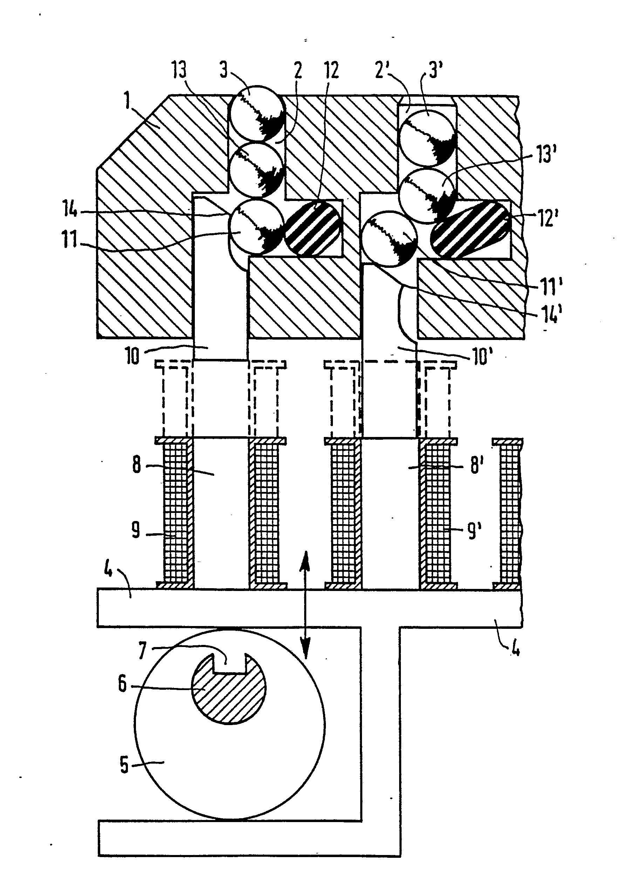

Als Ausführungsbeispiel der Erfindung ist in der Zeichnung ein Schnitt durch ein Punktschriftdisplay dargestellt. Der mit 1 bezeichnete Darstellungsträger ist an jeder Rasterstelle mit je einer Kammer versehen, in der sich je drei Kugeln befinden. Im Bild sind zwei dieser Kammern dargestellt.

Jede Kammer weist je einen zur Oberseite des Darstellungsträgers 1 führenden Kugelkanal 2 bzw. 2' auf, dessen obere Öffnung etwas verengt ist, um ein Austreten der Kugeln zu verhindern. Die oberste dieser Kugeln dient als Tastkugel 3 bzw. 3', die in ihrer Abtastposition mit ihrer oberen Kalotte aus der Öffnung des Kugelkanales 2 herausragt. In der gegebenen Darstellung befindet sich die Tastkugel 3 in der Abtastposition, während die Tastkugel 3' abgesenkt ist.

Die Tastkugeln 3,3' einer Formenzeile werden jeweils gleichzeitig in ihre Positionen gesetzt und zwar mit Hilfe einer in Form eines Schlittens ausgebildeten Stellvorrichtung 4, die mit Hilfe von zwei Exzentern 5, von denen in der Zeichnung nur eines sichtbar ist, angehoben und abgesenkt werden kann. Die Exzenter 5 sind zusammen mit der Stellvorrichtung 4 längs zweier, beiderseits des Darstellungsträgers 1 vorgesehener Schienen 6 senkrecht zur Zeilenrichtung verschiebbar angeordnet. Die Schienen 6, von denen ebenfalls nur eine sichtbar ist, sind als zylindrische, mit einer Längsnut 7 versehene Stäbe ausgebildet, die um ihre Längsachse verdrehbar angeordnet sind. Die Längsnut 7 gewährleistet die Übertragung der Verdrehung von den Schienen 6 auf die Exzenter 5. Auf der Stellvorrichtung 4 ist für jeden Rasterpunkt der Zeile je ein Stellanker 8,8' angebracht. Die Stellanker 8,8' bestehen aus einem magnetisierbaren Material und sind mit je einer Magnetisierungswicklung 9,9' versehen, mittels welcher sie einzeln magnetisierbar sind.

Das Setzen der Tastkugeln 3,3' einer Formenzeile erfolgt in der Weise, daß die Stellvorrichtung 4 zunächst unter diese Formenzeile gebracht wird, worauf wie mit den Stellankern 8,8' angehoben wird. Die Positionen der Stellanker 8,8' in derangehobenen Stellung sind durch strichlierte Linien angedeutet. In dieser Lage drücken die Stellanker 8,8' den einzelnen Raster punkten zugeordnete Verriegelungsanker 10,10' nach oben, die ihrerseits mittels ihrer abgeschrägten oberen Endflächen zugeordnete, als Verriegelungskugeln 11,11'ausgebildete Verriegelungsstücke seitlich gegen den Druck je eines federnden Gummiwulstes 12,12' verschieben. Oberhalb jeder der Verriegelungskugeln 11,11' befindet sich je eine weitere Kugel 13 bzw. 13', die als Füllkugel wirkend, als Distanzstück zwischen der Verriegelungskugel 11 bzw. 11' und der Tastkugel 3 bzw. 3' wirkt. Das Vorhandensein der Füllkugeln 13,13' ist nicht unbedingt erforderlich, jedoch von Vorteil bei der Kraftübertragung zwischen den erstgenannten Kugeln.

Nachdem sämtliche Tastkugeln 3,3' der betreffenden Formenzeile in die oberste Lage gebracht worden sind, werden mittels einer nicht dargestellten elektrischen Steuerschaltung die Magnetisierungswicklungen 9,9' jener Stellanker 8,8' erregt, deren zugehörigen Tastkugeln 3,3' nicht in der Abtastposition verbleiben sollen, worauf die Stellvorrichtung 4 mit den Stellankern 8,8' wieder abgesenkt wird. Hierbei werden jene Verriegelungsanker 10,10', die mit den jeweils erregten Stellankern 8 bzw. 8' in Berührung gestanden sind, durch die Magnetkraft mit nach abwärts gezogen.

Dies hat weiters zur Folge, daß die zugehörige Verriegelungskugel 11,11' durch den zugehörigen Gummiwulst 12,12' aus der Verriegelungslage herausgedrückt wird, worauf die jeweils darüberliegende Füllkugel 13,13' mit der zugehörigen Tastkugel 3,3' abgesenkt wird.

Jener Verriegelungsanker, beispielsweise der Verriegelungsanker 10, dessen zugehöriger Stellanker 8 beim Absenken der Stellvorrichtung 4 nicht erregt war, bleibt in seiner Verriegelungsstellung, weil er mit einem die Verriegelungskugel 11 teilweise umgreifenden Ansatz 14 versehen ist, der ein Absenken des Verriegelungsankers 10 unter der Wirkung seines Eigengewichtes verhindert. Bei einer Erregung des zugehörigen Magnetankers 8 würde jedoch die ausgeübte Magnetkraft ausreichen, beim Abwärtsziehen des Verriegelungsankers 10 mit dem Ansatz 14 die Verriegelungskugel 11 soweit gegen den Gummiwulst 12 zu drücken, daß die weitere Abwärtsbewegung des Verriegelungsankers 10 nicht behindert ist. Ergänzend ist noch darauf hinzuweisen, daß die Verriegelungsanker 10,10' mit je einer, in der Zeichnung jedoch nicht dargestellten Sperre versehen sind, die ein Herausfallen der Verriegelungsanker 10,10' aus dem Darstellungsträgers 1 zufolge des Eigengewichtes verhindert.

Eine einwandfreie Betätitung der Verriegelungsanker 10,10' ist nur dann gewährleistet, wenn alle Stellanker 8,8' in ihrer angehobenen Lage mit ihren zugeordneten Verriegelungsankern 10,10' in guten mechanischen Kontakt gelangen, damit im Falle einer Magnetisierung auch die erforderliche magnetische Kraftwirkung zustandekommt. Um dies zu gewährleisten, ist der für die Verriegelungsanker vorgesehene Raum so bemessen, daß diese, wie beim Verriegelungsanker 10 dargestellt, in ihrer obersten Lage noch ein Spiel haben, das einen Überhub ermöglicht.

Das Kopieren der auf dem Darstellungsträger 1 stehenden Zeichen (Formen oder Bilddarstellungen) erfolgt in der Weise, daß ein auf den Darstellungsträger 1 aufgelegter Bogen eines stärkeren Schreibpapieres mit einer Gummiwalze überfahren und dabei gegen die Rasterpunkte gedrückt wird. Hierbei hinterlassen die in ihre Abtastpositionen gesetzten Tastkugeln 3 bleibende Abdrücke in dem Schreibpapier, die mit dem gleichen Auflösungsvermögen abtastbar sind wie die Tastkugeln selbst. Diese Art des Kopiervorganges erfordert allerdings eine feste Verriegelung der Tastkugeln, die oben durch den speziellen Aufbau des erfindungsgemäßen Display gewährleistet ist.

Bezugszeichenliste

    1 Darstellungsträger
    2,2' Kugelkanäle
    3,3' Tastkugeln
    4 Schlitten
    5 Schiene
    6 Rollen
    7 Stellvorrichtung
    8,8' Stellanker
    9,9' Magnetisierungswicklungen
    10,10' Verriegelungsanker
    11,11' Verriegelungskugeln
    12,12' Gummiwülste
    13,13' Füllkugeln
    14 Ansatz am Verriegelungsanker 10

**Ansprüche**

1. Taktiles Punktschrift-bzw. Bilddisplay mit einem flächenhaften Darstellungsträger mit in ihren Abtastpositionen erhabenen Rasterpunkten, die von durch Öffnungen an der Oberseite des Darstellungsträgers hindurchragende Kalotten von Tastkugeln gebildet werden, die durch Verstellung zugeordneter Verriegelungsstücke selektiv in die Abtastposition gebracht werden, **dadurch gekennzeichnet,** daß zur Verstellung jedes Verriegelungsstückes (11,11') je ein in die Unterseite des Darstellungsträgers (1) einschiebbarer Verriegelungsanker (10,10') vorgesehen ist, der mittels eines Stellankers (8,8') einer beweglichen Stellvorrichtung (4) einerseits in die Verriegelungslage einschiebbar und anderseits nach Magnetisierung des Stellankers (8,8') durch diesen aus der Verriegelungslage lösbar ist.

2. Display nach Anspruch 1, **dadurch gekennzeichnet,** daß als Verriegelungsstück eine unter Federdruck stehende Verriegelungskugel (11,11') dient, die in der Verriegelungslage durch den Verriegelungsanker (10,10') gegen den Federdruck unter die Tastkugel (3,3') verschoben ist, um diese in ihrer Abtastposition festzuhalten.

3. Display nach Anspruch 1 oder 2, **dadurch gekennzeichnet,** daß zwischen der Tastkugel (3,3') und der Verriegelungskugel (11,11') eine weitere, der Distanzeinhaltung dienende Füllkugel (13,13') angeordnet ist.

4. Display nach einem der vorhergehenden Ansprüche, **dadurch gekennzeichnet,** daß der Verriegelungsanker (10,10') mit einem die Verriegelungskugel (11,11') in der Verriegelungslage teilweise umgreifenden Ansatz (14,14') versehen ist, der eine leicht lösbare, kraftschlüssige Verbindung herstellt.

5. Display nach einem der vorhergehenden Ansprüche, **dadurch gekennzeichnet,** daß die Stellanker (8,8') für mehrere Rasterpunkte, insbesondere für die Rasterpunkte einer Formenzeile, zusammen mit ihren Magnetisierungswicklungen (9,9') auf einer gemeinsamen Stellvorrichtung (4) angeordnet sind.

6. Display nach Anspruch 5, **dadurch gekennzeichnet,** daß die für eine Formenzeile vorgesehene Stellvorrichtung (4) auf beiderseits des Darstellungsträgers (1) vorgesehenen Schienen (6) senkrecht zur Zeilenrichtung verschiebbar angeordnet ist und zum Zweck der Einstellung der Abtastpositionen der Rasterpunkte dieser Formenzeile mit Hilfe von Exzentern (5) gegenüber dem Darstellungsträger (1) verstellbar ist.

7. Display nach Anspruch 6, **dadurch gekennzeichnet,** daß die Exzenter (5) auf den Schienen (6) verschiebbar, jedoch mittels einer Längsnut gegen relative Verdrehung gegenüber den Schienen (6) gesichert angeordnet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 161 401 (SIEMENS AG) * Zusammenfassung; Ansprüche 2,6-8; Figuren * | 1,2 | G 09 B 21/00 |
| A | IBM TECHNICAL DISCLOSURE BULLETIN, Band 15, Nr. 2, Juli 1972, Seiten 397-398, New York, US; E.S. PEARSON: "Reader for the blind" * Insgesamt * | 5-7 | |
| D,A | DE-A-2 608 659 (W. BOLDT) * Insgesamt * | 1-4 | |

RECHERCHIERTE SACHGEBIETE (Int. Cl.4)

G 09 B

Der vorliegende Recherchenbericht wurde für alle Patentansprüche erstellt.

| Recherchenort | Abschlußdatum der Recherche | Prüfer |
|---|---|---|
| DEN HAAG | 27-07-1987 | ODGERS M.L. |